# DEMANDE DE BREVET EUROPEEN

(11) **EP 2 597 357 A1**
(43) Date de publication de la demande: **29.05.2013**
(21) Numéro de dépôt: 12192724.8
(22) Date de dépôt: 15.11.2012
(51) Int. Cl.: F21S 8/10, F21V 15/00, B60Q 1/00

(54) **Elément opaque et mobile empechant une focalisation des rayons solaires dans un projecteur**

(30) Priorité: 24.11.2011 FR 1160752
(71) Demandeur: VALEO VISION, 93012 Bobigny Cedex (FR)
(72) Inventeur: Albou, Pierre, 75013 PARIS (FR); Puente, Jean-Claude, 93190 LIVRY GARGAN (FR); Reiss, Benoît, 95580 MARGENCY (FR)

(57) **Abrégé**

L'invention concerne un dispositif d'éclairage et/ou de signalisation 1 comprenant au moins une source principale de lumière 7 et un dispositif optique de focalisation 12 apte à recevoir une lumière générée par la source principale de lumière 7 en vue de former un faisceau lumineux principal 20 caractérisé en ce qu'il comprend un élément 14 opaque et mobile entre au moins deux positions A, A', l'une des positions interposant l'élément 14 opaque entre la source principale de lumière 7 et le dispositif optique de focalisation 12, dans lequel l'élément 14 opaque est agencé de manière à ce que lorsqu'il est interposé entre la source principale de lumière 7 et le dispositif optique de focalisation 12 il empêche la focalisation par le dispositif optique de focalisation 12, notamment selon une ligne ou un point, de rayons 2 provenant de l'extérieur du dispositif d'éclairage et/ou de signalisation 1, afin d'éviter une dégradation du dispositif d'éclairage et/ou de signalisation 1.

L'invention vise également un procédé de commande d'un tel dispositif d'éclairage et/ou de signalisation.

Application aux véhicules automobiles.

## Description

Le secteur technique de la présente invention est celui des dispositifs d'éclairage et/ou de signalisation pour véhicule automobile, et plus particulièrement de module optique comprenant au moins une source de lumière et un dispositif optique de focalisation équipant de tel module.

Un projecteur monté sur un véhicule automobile est classiquement composé d'un boîtier fermé par une glace délimitant ainsi un volume interne dans lequel on trouve des composants qui participent à la génération d'un faisceau lumineux destiné à être projeté sur la route emprunté par le véhicule.

Parmi ces composants, on trouve notamment une source de lumière, un masque, dont la fonction est de cacher la partie mécanique et électrique de composants que l'on souhaite rendre invisible depuis l'extérieur du projecteur, ou un élément générateur d'une coupure, dans le cas où le projecteur fournit une fonction d'éclairage de type code.

Pour un projecteur équipé d'un dispositif de focalisation, il a été constaté une dégradation des composants évoqués plus haut. En effet, le dispositif de focalisation, dont la fonction primaire est de concentrer la lumière émise par la source de lumière en vue de générer un faisceau lumineux quand le projecteur est activé, présente une tendance à focaliser également les rayons du soleil qui entrent dans le dispositif d'éclairage et/ou de signalisation.

En fonction de la position du soleil dans le ciel, il est des situations où le dispositif de focalisation concentre les rayons du soleil sur l'un ou l'autre des composants installés à l'intérieur du dispositif d'éclairage et/ou de signalisation. De manière plus précise, la concentration des rayons du soleil sur la source de lumière entraîne une élévation de sa température jusqu'à dépasser la limite maximale admissible par la source lumineuse. C'est également le cas en ce qui concerne les composants électroniques qui sont au voisinage de la source de lumière. Une telle situation génère un risque d'incendie du véhicule.

La situation est encore plus critique pour l'élément générateur de la coupure puisque celui-ci présente des tolérances extrêmement précises en vue de respecter les normes relatives à la définition d'une coupure. L'emploi d'un plastique est ainsi proscrit en présence d'un dispositif de focalisation qui concentre les rayons du soleil car on risque de brûler l'élément générateur de la coupure. On emploie alors un matériau métallique pour fabriquer cet élément générateur de la coupure ce qui, outre des problèmes de compatibilité entre le module optique généralement en plastique et l'élément métallique générateur de la coupure, provoque les inconvénients cités ci-dessus.

Le but de la présente invention est donc de résoudre les inconvénients décrits ci-dessus principalement en interrompant le parcours des rayons en provenance du soleil afin d'empêcher toute concentration de ces rayons à l'intérieur du dispositif d'éclairage et/ou de signalisation.

L'invention a donc pour objet un dispositif d'éclairage et/ou de signalisation comprenant au moins une source principale de lumière et un dispositif optique de focalisation apte à recevoir une lumière générée par la source principale de lumière en vue de former un faisceau lumineux principal **caractérisé en ce qu'il** comprend un élément opaque et mobile entre au moins deux positions, l'une des positions interposant l'élément opaque entre la source principale de lumière et le dispositif optique de focalisation, dans lequel l'élément opaque est agencé de manière à ce que lorsqu'il est interposé entre la source principale de lumière et le dispositif optique de focalisation il empêche la focalisation par le dispositif optique de focalisation, notamment selon une ligne ou un point, de rayons provenant de l'extérieur du dispositif d'éclairage et/ou de signalisation, afin d'éviter une dégradation du dispositif d'éclairage et/ou de signalisation.

L'élément est opaque dès lors qu'il s'oppose au passage de rayons lumineux l'atteignant, par exemple en les réfléchissant ou en les absorbant. Une telle opacification est réalisée, par exemple, par dépôt d'une peinture non translucide sur l'élément opaque ou par la matière même employée pour la réalisation de cet élément opaque.

Un tout premier avantage selon l'invention réside dans la possibilité d'employer des matériaux plastiques moins onéreux pour la réalisation de composants comme l'élément générateur de la coupure. En effet, l'invention empêche toute concentration des rayons du soleil sur ces composants.

De même, la source principale de lumière se trouve protégé des rayons provenant du soleil et on évite ainsi une dégradation de celle-ci.

Un autre avantage réside dans la possibilité d'améliorer l'aspect esthétique visible depuis l'extérieur du dispositif d'éclairage et/ou de signalisation. En effet, l'élément opaque peut présenter une fonction décorative, par exemple en couvrant la première face de l'élément opaque d'un traitement, une couche de peinture notamment, qui correspond à la teinte de la carrosserie du véhicule destiné à recevoir le dispositif d'éclairage et/ou de signalisation.

Le dispositif selon l'invention comprend un module optique apte à générer un faisceau lumineux, notamment un faisceau lumineux formant au moins en partie le faisceau lumineux principal, le module comprenant des composants parmi lesquels on trouve au moins la source de lumière principale et le dispositif optique de focalisation, l'élément opaque étant agencé de manière à ce que lorsqu'il est interposé entre la source principale de lumière et le dispositif optique de focalisation, il empêche la focalisation par le dispositif optique de focalisation de rayons provenant de l'extérieur du dispositif d'éclairage et/ou de signalisation sur au moins un des composants du module optique, afin d'éviter une dégradation dudit composant du module optique.

Le composant dont on souhaite éviter la dégradation est, par exemple, la source principale de lumière, mais il peut également s'agir d'un organe de coupure du faisceau principal, notamment prenant la forme d'une plieuse.

On entend par organe de coupure un organe apte à bloquer ou dévier des rayons lumineux provenant de la source de lumière principale pour former une coupure dans le faisceau lumineux principal.

Par exemple, le module optique peut comprendre au moins un organe de coupure du faisceau principal.

Ledit au moins composant du module optique est la source de lumière principale et/ou l'organe de coupure du faisceau principal.

Le dispositif selon l'invention comprend des moyens d'émission d'un faisceau lumineux additionnel vers le dispositif optique de focalisation, ces moyens comprenant ledit élément opaque. Les rayons lumineux du faisceau lumineux additionnel se propagent de l'élément opaque vers le dispositif optique de focalisation. L'élément opaque est ainsi un élément qui participe à la génération du faisceau lumineux additionnel. Il peut également être le moyen générateur de ce faisceau lumineux additionnel.

Il s'agit là d'un autre avantage de l'invention qui réside dans le fait que, outre la fonction d'écran remplie par l'élément opaque, celui-ci participe d'une fonction d'éclairage additionnelle, par exemple un feu diurne.

Le dispositif optique de focalisation est agencé pour former à partir du faisceau lumineux additionnel une fonction photométrique souhaitée, notamment un feu de jour. Par fonction photométrique souhaitée, on entend une fonction photométrique propre aux véhicules automobiles et réglementée. Il peut également s'agir d'un feu de position.

L'élément opaque comprend une première face tournée vers le dispositif optique de focalisation, ladite première face étant réfléchissante. Cette disposition permet de renvoyer les rayons du soleil vers l'extérieur du dispositif d'éclairage et/ou de signalisation. On profite également de cette particularité de l'invention pour refléter le faisceau lumineux additionnel, notamment généré par une source lumineuse additionnelle distincte de la source principale de lumière, vers l'élément de focalisation pour former une fonction photométrique souhaitée. On peut ainsi réaliser aisément un éclairage diurne connu sous l'acronyme DRL, de l'anglais « Day Running Light », ce qui permet de donner une fonction supplémentaire à l'élément opaque.

La première face réfléchissante est agencée pour réfléchir au moins 20% des rayons provenant de l'extérieur du dispositif d'éclairage et/ou de signalisation ou dudit faisceau lumineux additionnel.

Le coefficient de réflexion indiqué ci-dessus correspond à ce qu'il faut pour assurer l'absence de dégradation du composant, notamment la plieuse. Dans le cas d'une réflexion du faisceau lumineux additionnel, un tel coefficient atteint 60% par application de chrome sur l'élément opaque, ou encore 70% par aluminage du plastique constitutif de l'élément opaque. Un coefficient de 50% peut aussi être choisi pour le cas de peintures aluminisée.

L'élément opaque et mobile peut également absorber les rayons provenant de l'extérieur du dispositif d'éclairage et/ou de signalisation. Il est ainsi absorbant.

En pratique, une pièce peinte ou teintée dans la masse ou réalisée en matière réputée opaque permet d'absorber jusqu'à 90% des rayons.

L'élément opaque, par exemple un obturateur ou un écran, est mobile en ce qu'il peut être déplacé à l'intérieur du dispositif d'éclairage et/ou de signalisation.

Selon une première caractéristique de l'invention, l'élément opaque est interposé entre la source principale de lumière et le dispositif optique de focalisation afin d'empêcher une convergence de rayons provenant de l'extérieur du dispositif d'éclairage et/ou de signalisation de manière à éviter une dégradation, par exemple de la source principale de lumière, en un point de convergence ou de focalisation.

Selon une caractéristique de l'invention, l'élément opaque comprend une première face tournée vers le dispositif optique de focalisation, ladite première face étant réfléchissante.

Le dispositif comprend une source lumineuse additionnelle séparée de l'élément opaque qui permet de générer en totalité ou en partie le faisceau lumineux additionnel. Par séparé, on entend physiquement distinct, l'élément opaque étant susceptible de bouger alors que la source lumineuse additionnelle est fixe. Cette source lumineuse additionnelle est alors installée dans le dispositif d'éclairage et/ou de signalisation entre le dispositif optique de focalisation et l'élément opaque quand celui-ci est interposé entre la source principale de lumière et le dispositif optique de focalisation. Elle génère ainsi son faisceau lumineux additionnel en direction de l'élément opaque, ce qui offre des latitudes de positionnement de cette source lumineuse additionnelle dans le dispositif d'éclairage et/ou de signalisation.

L'élément opaque comprend un corps transparent ou translucide, ledit corps comprenant une première face tournée vers le dispositif optique de focalisation, ladite première face étant transparente ou translucide, et une deuxième face tournée vers la source principale de lumière, ladite deuxième face étant opaque, ledit corps étant agencé pour conduire un faisceau lumineux additionnel. On entend par « conduire » le fait que les rayons lumineux sont diffusés à l'intérieur du corps formant l'élément opaque, ce dernier ce comportant ainsi comme un guide de lumière.

Une telle disposition permet d'installer une source lumineuse additionnelle dans le prolongement du parcours emprunté par l'élément opaque lors de son mouvement.

L'élément opaque comprend une source lumineuse additionnelle capable de générer ledit faisceau lumineux additionnel et agencée de manière à ce que ledit faisceau lumineux additionnel se propage dans ledit corps transparent ou translucide.

Selon un exemple de réalisation, le faisceau lumineux additionnel est généré par une source lumineuse additionnelle solidaire de l'élément opaque. Le corps de l'élément opaque joue alors un rôle de guide de lumière et de support mécanique de la source lumineuse additionnelle. L'élément opaque et la source lumineuse additionnelle forment ainsi un sous-ensemble unitaire.

En ce qui concerne le faisceau lumineux additionnel mentionné ci-dessus, on notera que celui-ci peut assurer seul la fonction photométrique souhaitée, notamment le DRL. L'invention couvre également le cas où un module adjacent et indépendant se combine avec le faisceau lumineux additionnel pour réaliser la fonction photométrique en question.

Selon encore une autre caractéristique de l'invention, ladite première face est lisse.

Alternativement, la première face présente une pluralité de déformations. Ces déformations réalisent ainsi une réflexion des rayons du soleil ou des rayons du faisceau additionnel qui viennent frapper l'élément opaque de sorte à diffuser dans plusieurs directions lesdits rayons.

Ces déformations sont par exemple des prismes, notamment à facettes planes.

Selon un exemple de réalisation de l'invention, l'élément opaque comprend une source lumineuse additionnelle, ladite source lumineuse additionnelle étant une source lumineuse surfacique dont la surface émettant de la lumière est tournée vers le dispositif optique de focalisation.

Avantageusement, l'aire d'émission de la source surfacique de lumière est supérieure à 1 cm², voire supérieure à 5 cm², voire supérieure à 10 cm².

Préférentiellement, la source surfacique de lumière présente une forte directivité d'émission dans la direction perpendiculaire à sa surface émettrice, comparativement aux diodes électroluminescentes lambertiennes.

Si on le souhaite, la source surfacique de lumière a une luminance d'au moins 5 000 Cd/m2.

Par exemple, la source lumineuse surfacique est une diode électroluminescente organique.

Selon un exemple de réalisation, la mobilité de l'élément opaque est opérée par un mouvement de rotation de l'élément opaque.

L'axe de rotation est sensiblement vertical ou sensiblement horizontal, et notamment perpendiculaire à un axe optique du dispositif d'éclairage et/ou de signalisation défini par la direction empruntée par le faisceau lumineux principal généré par la source principale de lumière.

Alternativement, la mobilité de l'élément opaque est opérée par un mouvement de translation de l'élément opaque.

Selon ces deux exemples de réalisation, l'élément opaque est un volet apte à prendre une première position interposant l'élément opaque entre la source principale de lumière et le dispositif optique de focalisation sous l'action d'un moyen de rappel, et une deuxième position où il autorise le passage de la lumière en provenance de la source principale de lumière, notamment au travers du dispositif optique de focalisation, par l'activation d'un actuateur. La première position est située entre la source principale de lumière et le dispositif optique de focalisation et dans le prolongement de la source principale de lumière et du dispositif de focalisation. La deuxième position équivaut à un escamotage du volet pour le placer hors du volume qui sépare la source principale de lumière du dispositif optique de focalisation.

Selon un exemple de réalisation préféré, l'élément opaque est interposé entre la source principale de lumière et le dispositif optique de focalisation lorsque la source principale de lumière est éteinte, notamment lorsque ni l'actuateur ni la source principale de lumière ne sont alimentés, par exemple lorsque l'alimentation électrique du véhicule est interrompue.

Cette caractéristique offre l'avantage de pouvoir empêcher la focalisation de rayons lumineux provenant de l'extérieur du dispositif d'éclairage et/ou de signalisation dans le dispositif quelque soit l'état du véhicule, par exemple lorsque le véhicule est stationnée de jour. Il est ainsi possible d'accroître la sécurité du véhicule et de diminuer la consommation en électricité.

Avantageusement, la source principale de lumière est au moins une diode électroluminescente. Avantageusement, la source principale de lumière supporte également un dispositif de commande de la ou des diodes électroluminescentes.

Avantageusement encore, le dispositif optique de focalisation est une lentille.

Enfin, le dispositif selon l'invention comprend un boîtier fermé par une paroi transparente et délimitant un volume interne dans lequel s'étendent au moins la source principale de lumière, le dispositif optique de focalisation et l'élément opaque amovible.

Dans le volume interne, on trouve un module optique constitué d'une source principale de lumière agencée à l'intérieur d'un réflecteur. Un tel réflecteur est par exemple concave, notamment de forme ellipsoïdale ouvert vers l'avant, c'est-à-dire en direction de la paroi transparente.

Selon une variante, le dispositif de focalisation est une lentille bi-convexe.

Parmi les composants, on trouve encore un organe de coupure, notamment formé par un cache ou une plieuse. Cet organe de coupure est par exemple mobile en translation mais préférentiellement en rotation.

L'invention vise également un procédé de commande d'un dispositif d'éclairage et/ou de signalisation d'un véhicule automobile comprenant au moins une source principale de lumière et un dispositif optique de focalisation apte à recevoir une lumière générée par la source principale de lumière en vue de former un faisceau lumineux principal, ledit dispositif d'éclairage et/ou de signalisation comprenant un élément opaque et mobile, dans lequel on interpose l'élément opaque entre la source principale de lumière et le dispositif optique de focalisation pour empêcher la focalisation par le dispositif optique de focalisation, notamment selon une ligne ou un point, de rayons provenant de l'extérieur du dispositif d'éclairage et/ou de signalisation, afin d'éviter une dégradation du dispositif d'éclairage et/ou de signalisation.

Dans ce procédé, le dispositif d'éclairage et/ou de signalisation comprenant un module optique apte à générer un faisceau lumineux, notamment un faisceau lumineux formant au moins en partie le faisceau lumineux principal, le module comprenant des composants parmi lesquels on trouve au moins la source de lumière principale et le dispositif optique de focalisation, on interpose l'élément opaque entre la source principale de lumière et le dispositif optique de focalisation pour empêcher la focalisation par le dispositif optique de focalisation de rayons provenant de l'extérieur du dispositif d'éclairage et/ou de signalisation sur au moins un des composants du module optique, afin d'éviter une dégradation dudit composant du module optique.

Dans ce procédé, le module optique peut comprendre au moins un organe de coupure du faisceau principal.

Par exemple, ledit au moins composant du module optique est la source de lumière principale et/ou l'organe de coupure du faisceau principal.

Dans ce procédé, l'élément opaque est interposé entre la source principale de lumière et le dispositif optique de focalisation quand la source principale de lumière est éteinte.

L'élément opaque est interposé entre la source principale de lumière et le dispositif optique de focalisation quand l'alimentation électrique du véhicule est interrompue.

Lorsque le dispositif d'éclairage et/ou de signalisation comprend une source lumineuse additionnelle, le procédé prévoit que l'on allume ladite source lumineuse additionnelle quand l'élément opaque est interposé entre la source principale de lumière et le dispositif optique de focalisation, c'est-à-dire lorsqu'il est placé dans sa première position.

Bien entendu, l'invention couvre un procédé mettant en oeuvre un dispositif d'éclairage et/ou de signalisation tel que détaillé ci-dessus.

En outre, l'élément opaque empêche de voir depuis l'extérieur du projecteur la source principale de lumière, dont l'aspect quand elle est éteinte est inesthétique, notamment dans le cas d'une diode électroluminescente blanche comprenant des phosphores de conversion.

D'autres caractéristiques, détails et avantages de l'invention ressortiront plus clairement à la lecture de la description donnée ci-après à titre indicatif en relation avec des dessins dans lesquels :
- la figure 1 est une vue schématique en coupe du dispositif d'éclairage et/ou de signalisation selon l'invention où la source principale de lumière est éteinte,
- la figure 2 est une vue schématique partielle similaire à celle de la figure 1 mais dans laquelle la source principale de lumière est activée,
- la figure 3 est une vue en coupe partielle d'une première variante de réalisation du dispositif d'éclairage et/ou de signalisation selon l'invention,
- la figure 4 est une vue en coupe partielle de la première variante où la source principale de lumière est activée,
- la figure 5 est une vue en coupe partielle d'une deuxième variante de réalisation du dispositif d'éclairage et/ou de signalisation selon l'invention,
- la figure 6 est une vue en coupe partielle de la deuxième variante où la source principale de lumière est activée.

Il faut noter que les figures exposent l'invention de manière détaillée pour mettre en oeuvre l'invention, lesdites figures pouvant bien entendu servir à mieux définir l'invention le cas échéant.

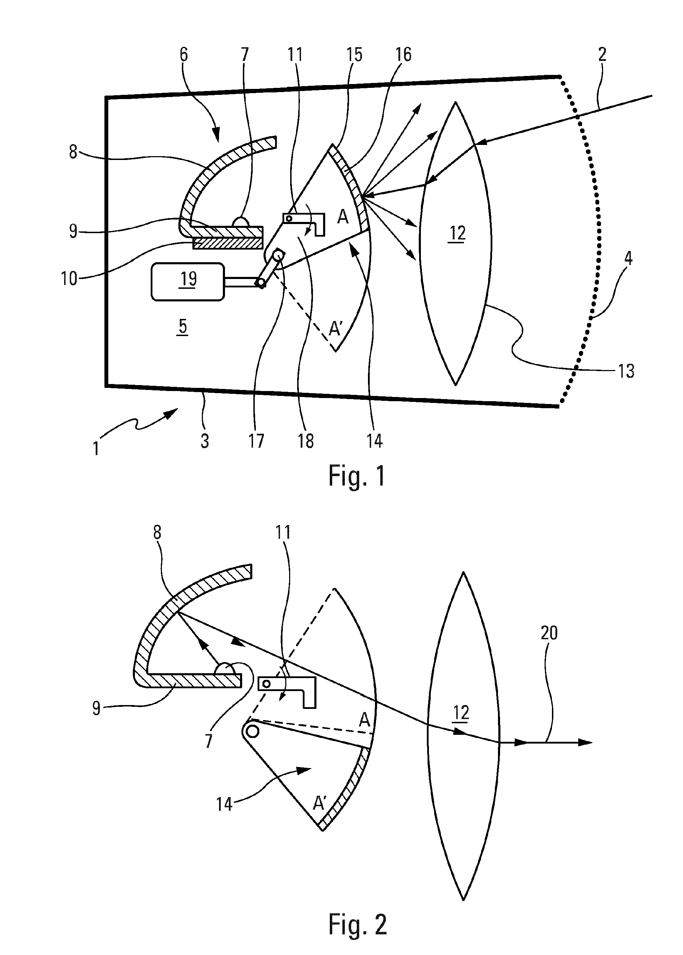

La figure 1 illustre un dispositif d'éclairage et/ou de signalisation 1 destiné à être monté sur un véhicule automobile. Un tel dispositif d'éclairage et/ou de signalisation 1 est par exemple un projecteur avant du véhicule mais l'invention trouve également une application intéressante pour un bloc de feux arrière d'un véhicule. En tout état de cause, l'invention trouvera application dans tous les cas où des rayons du soleil, ici référencés 2, sont susceptibles de se concentrer en un point à l'intérieur du dispositif d'éclairage et/ou de signalisation.

Le dispositif d'éclairage et/ou de signalisation 1 comprend un boîtier 3 en forme de cuvette creuse, le boîtier présentant une face ouverte. Le dispositif d'éclairage et/ou de signalisation 1 comprend encore une paroi transparente 4 installée au droit de la face ouverte du boîtier 3 de sorte à fermer un volume interne 5 du dispositif d'éclairage et/ou de signalisation 1. On comprend donc que le volume interne 5 est délimité par des parois opaques du boîtier 3 et par la paroi transparente 4, cette dernière étant par exemple une glace ou une paroi en polymère du type Polycarbonate.

Dans le volume interne 9, on trouve un module optique 6 constitué d'une source principale de lumière 7 agencée à l'intérieur d'un réflecteur 8 concave de forme par exemple ellipsoïdale ouvert vers l'avant, c'est-à-dire en direction de la paroi transparente 4.

La source principale de lumière 7 est par exemple une ou plusieurs diodes électroluminescentes mais il peut également s'agir d'une lampe à décharge, contenant par exemple du Xénon. Cette source lumineuse 7 est posée ou solidarisée sur un plat 9 sur lequel débute le réflecteur 8. La source principale de lumière 7 est commandée électriquement par un module de commande 10 qui prend la forme d'une carte supportant des composants électroniques destinés à contrôler l'allumage ou l'extinction de la source principale de lumière 7.

Le module optique 6 comprend encore un organe de coupure 11 qui détermine une hauteur de coupure des rayons lumineux émis par la source principale de lumière 7. Cet organe de coupure 11 prend la forme d'un cache (simple ou double) ou d'une plieuse et peut éventuellement être déplacé par exemple par translation ou encore par rotation afin de prendre au moins deux positions dont, par exemple, une première correspond à une projection sur la route d'un faisceau de type code et une seconde position où le composant s'escamote pour libérer l'intégralité du faisceau, notamment pour un éclairage de type route. On désigne notamment par le terme « plieuse » un cache dont au moins une des faces est réfléchissante de manière à réfléchir des rayons lumineux qui seraient, sans ce cache, situés au dessus de la coupure dans le faisceau.

Le dispositif d'éclairage et/ou de signalisation 1 comprend encore un dispositif optique de focalisation 12, ce dernier pouvant avantageusement faire partie du module optique 6.

Ce dispositif optique de focalisation 12 est placé longitudinalement en avant de la source principale de lumière 7, c'est-à-dire entre cette dernière et la paroi transparente 4. Ce dispositif est ainsi installé en avant d'un foyer formé au niveau du réflecteur 8 et sur la trajectoire des rayons émis par la source principale de lumière 7.

Selon un exemple de réalisation, le dispositif optique de focalisation 12 est une lentille, convexe ou bi-convexe. Une face avant 13 de cette lentille forme ainsi un dioptre.

Le dispositif d'éclairage et/ou de signalisation 1, et éventuellement le module optique 6 qui forme un sous-ensemble intégré dans le dispositif d'éclairage et/ou de signalisation, comprend un élément 14 opaque et amovible. Cet élément 14 est un écran, autrement appelé obturateur, susceptible de prendre au moins deux positions.

Sur la figure 1, l'élément 14 peut prendre deux positions dont une première position A est représentée en trait plein alors qu'une deuxième position A' est représentée en trait pointillé. La première position correspond à une situation où l'élément 14 est interposé entre la source principale de lumière 7 et le dispositif optique de focalisation 12. Autrement dit, l'élément 14 est installé de manière à protéger la source principale de lumière 7, l'organe de coupure 11, le réflecteur 8 ou le dispositif de commande 10, des rayons 2 provenant du soleil quand ceux-ci convergent vers un point de focalisation susceptible d'endommager par échauffement l'un ou l'autre des composants listés ci-dessus. On notera que la position du point de focalisation est variable en fonction de la position relative du véhicule par rapport au soleil.

La deuxième position A' correspond à une situation dans laquelle l'élément 14 s'efface de la trajectoire prise par la lumière émise par la source principale de lumière 7 quand celle-ci se dirige vers le dispositif optique de focalisation 12.

Le caractère opaque de l'élément 14 signifie que les rayons du soleil sont arrêtés, déviés, absorbés ou réfléchis par l'élément 14.

Selon un premier exemple de réalisation, l'élément opaque absorbe les rayons du soleil 2 sans les refléter dans le volume interne 5 du dispositif d'éclairage et/ou de signalisation 1, une tel absorption étant mise en oeuvre, par exemple, par l'application d'une peinture sur l'élément 14.

De manière avantageuse, l'élément 14 peut être rendu opaque par le fait qu'il est porteur d'une couche de peinture, dont la teinte est destiné à être identique à la teinte de la carrosserie du véhicule qui recevra le dispositif d'éclairage et/ou de signalisation 1.

Selon un autre exemple de réalisation, l'élément 14 comprend une première face 15 tournée vers le dispositif optique de focalisation 12. L'élément 14 est rendu opaque par le fait que cette première face réfléchit les rayons 2 du soleil de sorte à les disperser dans le dispositif d'éclairage et/ou de signalisation. Une telle réflexion peut être réalisée par le fait que la première surface 15 est porteuse d'un moyen formant miroir, un tel moyen pouvant par exemple être formé par une couche aluminisée ou chromée déposée sur l'élément 14.

L'élément 14 est également mobile entre la première position A et la deuxième position A'. Cette mobilité est obtenue par tous moyens permettant à l'élément de prendre ces deux positions. Selon un exemple de réalisation, l'élément 14 prend la forme d'un volet plan et rectiligne qui subit un mouvement de translation rectiligne.

Selon un autre exemple de réalisation, l'élément 14 prend la forme d'un volet avec une paroi courbée 16 reliée à un arbre de rotation 17 par au moins un bras 18. L'arbre de rotation tourne autour d'un axe de rotation qui, dans l'exemple de la figure 1, s'étend selon une direction horizontale, ou sensiblement horizontale, de manière orthogonale à un axe optique représentant la direction générale empruntée par le faisceau principale de lumière généré par la source principale de lumière 7.

De manière alternative, l'arbre 17 peut s'étendre selon un axe de rotation perpendiculaire à l'axe optique mais qui s'étend selon une direction verticale, ou sensiblement verticale.

Une meilleure stabilité de l'élément 14 sera obtenue si la paroi courbée est maintenue à chacune de ces extrémités par un bras 18. L'arbre de rotation 17 coopère avec au moins un palier solidaire du dispositif d'éclairage et/ou de signalisation 1, ce palier étant disposé à proximité immédiate du fond 9 supportant la source principale de lumière 7. Selon cet exemple de réalisation, la mobilité de l'élément opaque 14 est opérée par une rotation de cet élément.

Comme on le verra plus tard, l'élément 14 opaque et mobile est interposé entre la source principale de lumière 7 et le dispositif optique de focalisation 12 quand la source principale de lumière est éteinte, c'est-à-dire principalement en conditions diurnes. Un tel positionnement de l'élément opaque peut aussi être ordonné quand l'alimentation électrique du véhicule porteur du dispositif d'éclairage et/ou de signalisation 1 est interrompue.

La première position de l'élément 14 correspond à une position de repos en ce sens qu'il est maintenu en cette position sans l'apport de moyen consommateur d'électricité. A titre d'exemple, la première position est maintenue ainsi par un moyen de rappel qui tend naturellement à maintenir l'élément 14 dans la première position. En pratique, un ressort installé entre le boîtier 3 du dispositif d'éclairage et/ou de signalisation et l'élément 14 assure cette fonction de maintien en première position.

Le dispositif d'éclairage et/ou de signalisation 1 comprend un actuateur 19, par exemple électrique ou pneumatique, dont la fonction est de faire passer l'élément 14 de la première position A à la deuxième position A', et de maintenir cette deuxième position A' tant que la source principale de lumière 7 est activée.

Sur la figure 2, on a représenté une partie du dispositif d'éclairage et/ou de signalisation de la figure 1. Alors que sur cette dernière, on interdit l'entrée des rayons du soleil pour éviter tout échauffement par convergence de ces rayons, la figure 2 illustre une situation où la source principale de lumière 7 est activée, soit pour réaliser un faisceau lumineux principal 20 de type code en combinaison avec l'organe de coupure 11, soit pour réaliser un faisceau de type route quand l'organe de coupure 11 n'obstrue pas ce faisceau.

Dans une telle situation, l'élément 14 est escamoté de sa première position A pour ne pas gêner le passage de la lumière émise par la source principale de lumière 7. Cet effacement de l'élément 14 est réalisé par une rotation selon un sens horaire pour amener l'élément 14 sous un plan horizontal passant par le fond 9. Bien entendu, ceci n'est qu'un exemple de réalisation et l'invention couvre également le cas où l'élément 14 est escamoté sur le côté gauche ou droit de la source principale de lumière 7, ou encore le cas dans lequel l'élément 14 est escamoté au dessus du réflecteur 8, selon une direction verticale.

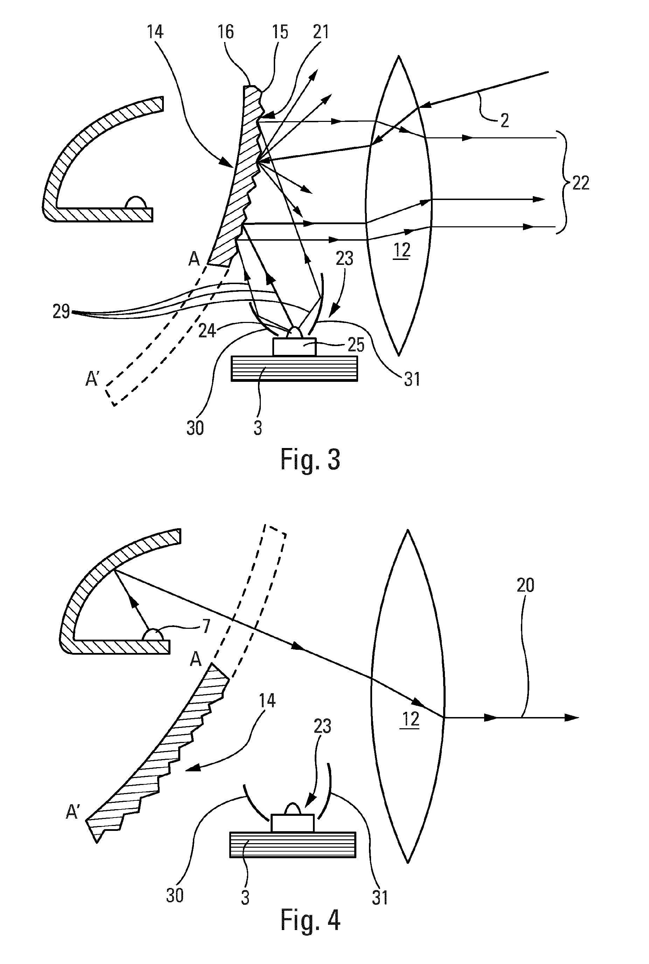

Les figures 3 et 4 montrent une première variante de l'invention. Les éléments identiques à la réalisation selon les figures 1 et 2 ne seront pas décrits à nouveau. En revanche, on s'attachera à décrire ci-dessous les différences avec la structure décrite aux figures 1 et 2.

L'élément 14 opaque et mobile prend la forme d'une portion de cylindre. Autrement dit, la paroi courbée 16 n'est pas rattachée à un arbre de rotation mais elle translate dans des rainures (non représentées) réalisées dans le boîtier 3 du dispositif d'éclairage et/ou de signalisation 1.

La forme de la première face 15 est ici accidentée. Autrement dit, la première face 15 comprend des déformations 21 qui contribuent à diffuser les rayons 2 en provenance du soleil.

Que cela soit dans le cas de la surface lisse de la première face 15 (figure 1) ou de la présence de déformations 21 telles qu'illustrées aux figures 3 et 4, la première face est agencée pour refléter un faisceau lumineux additionnel 22. Un tel faisceau est additionnel en ce sens qu'il est distinct de la lumière générée par la source principale de lumière 7.

Selon un exemple de réalisation, ce faisceau additionnel est opéré par une source lumineuse additionnelle 23 disposée dans le volume interne du dispositif d'éclairage et/ou de signalisation de manière séparée et distincte de la source principale de lumière 7. Selon cette variante, cette source lumineuse additionnelle 23 est formée par une ou plusieurs diodes électroluminescentes 24 installées sur un support 25 qui est solidaire du boîtier 3 constitutif du dispositif d'éclairage et/ou de signalisation. On comprend donc que la source lumineuse additionnelle 23 est séparée de l'élément 14, ce dernier pouvant se mouvoir entre sa première position A et sa deuxième position A' sans impliquer de mouvement de la source lumineuse additionnelle 23.

Pour que le faisceau lumineux additionnel 22 soit projeté à l'extérieur du dispositif d'éclairage et/ou de signalisation, la source lumineuse 23 est montée entre l'élément 14 et le dispositif optique de focalisation 12.

Dans l'exemple décrit, le dispositif d'éclairage et/ou de signalisation 1 comporte deux réflecteurs paraboliques 30 et 31 agencés pour collimater des rayons lumineux 29 émis par la ou les diodes 24 vers la première face 15, de manière à optimiser la puissance lumineuse du faisceau lumineux additionnel 22. L'invention ne se limite pas à ce type de collimateur et il pourrait être envisagé d'utiliser une lentille convergente ou un miroir sphérique. Il importe ici de disposer d'un moyen apte à faire converger les rayons émis par la source lumineuse additionnelle 23.

Après collimation, les rayons lumineux 29 sont réfléchis par la première face 15, notamment par ses déformations, vers le dispositif optique de focalisation 12 afin de former une fonction photométrique supplémentaire.

On met ainsi à profit la présence de l'élément protecteur 14 pour lui affecter une fonction supplémentaire. Dans le cas présent, cette fonction est un éclairage diurne (« DRL ») mais il peut également s'agir d'un indicateur de direction, ou encore un feu de position (également appelé lanterne).

La figure 4 montre la structure de la première variante mais dans une situation où la source principale de lumière 7 est activée, ce qui implique une extinction de la source lumineuse additionnelle 23 accompagnée d'un mouvement de l'élément 14 pour le faire passer de sa première position A à sa deuxième position A' afin de dégager le passage du faisceau 20.

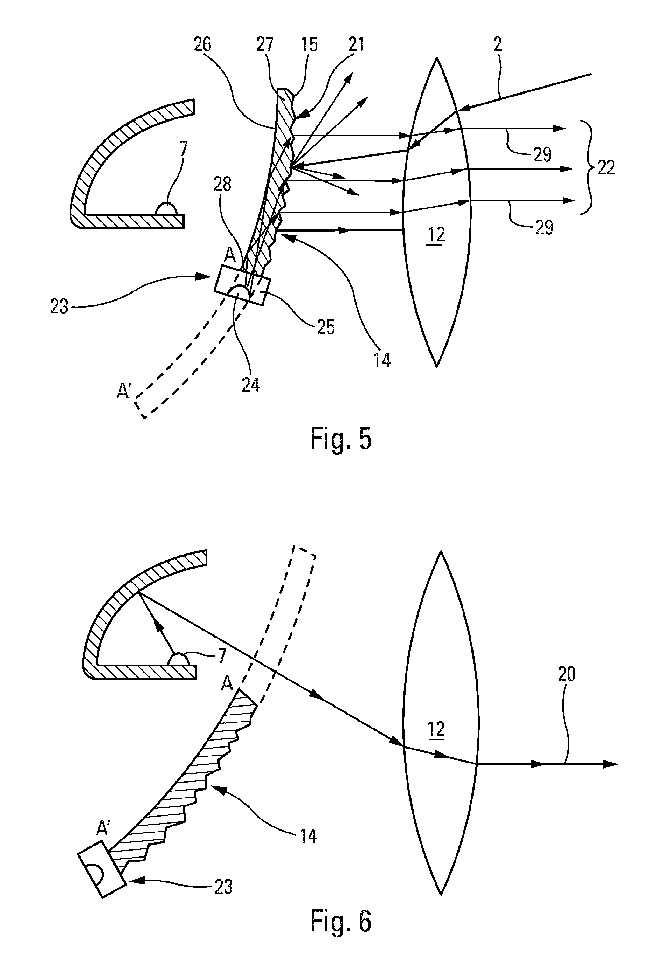

Les figures 5 et 6 montrent une deuxième variante de l'invention. Les éléments identiques à la réalisation selon les figures 3 et 4 ne seront pas décrits à nouveau. En revanche, on s'attachera à décrire ci-dessous les différences avec la structure décrite aux figures 3 et 4.

Selon cette deuxième variante, l'élément 14 est rendu opaque par un traitement d'une deuxième face 26, cette deuxième face 26 étant opposée à la première face 15 par rapport à un corps 27 constitutif de l'élément 14. Autrement dit, cette deuxième face 26 est celle de l'élément 14 qui est tournée vers la source principale de lumière 7. Le traitement de cette deuxième face peut, par exemple, être réalisé par l'application d'un revêtement réfléchissant, par exemple, un aluminiage, sur la deuxième face 26, cette couche interdisant la propagation des rayons 2 du soleil après l'élément 14.

Le corps 27 est translucide et avantageusement transparent. Il est par exemple réalisé dans une matière plastique capable de transporter ou conduire un faisceau lumineux. Le corps 27 est ainsi agencé comme un guide de lumière dédié à la source lumineuse additionnelle 23.

Selon cette deuxième variante, la source lumineuse additionnelle est solidaire de l'élément 14 en ce sens qu'elle se déplace en même temps que cet élément. Le support 25 est ainsi solidarisé sur une tranche ou extrémité 28 de l'élément 14 et la ou les diodes électroluminescentes sont installées de manière à ce que des rayons lumineux additionnels 29 émis par la source lumineuse additionnelle 23 pénètrent dans l'épaisseur de l'élément 14, c'est-à-dire dans le corps 27 entre la première face 15 et la deuxième face 26.

Les rayons lumineux additionnels 29 sont guidés dans le corps translucide 27 vers la première face 15.

On entend par guidage le fait que les rayons 29 atteignent la première face 15 soit directement, soit après réflexion sur la deuxième face 26.

Les rayons lumineux additionnels 29 sortent de l'élément 14 par une pluralité de déformations 21 ménagées sur la première face 15 pour former le faisceau lumineux additionnel 22.

Alternativement on peut prévoir une première face 15 lisse et des motifs déviateurs, par exemple prismatiques, sur la deuxième face 26 afin de perturber suffisamment le guidage des faisceaux localement pour faire sortir les rayons de l'élément opaque 14.

La source lumineuse additionnelle a été représentée sur la tranche inférieure 28 de l'élément 14 mais il va de soi que l'invention couvre le cas où cette source est installée sur une tranche supérieure de l'élément 14 opaque et mobile. De manière générale et pour cette deuxième variante de réalisation, on comprend que la source lumineuse additionnelle 23 est solidaire de l'élément 14 opaque.

La figure 6 montre la structure de la deuxième variante de l'invention dans une situation où la source principale de lumière 7 est activée générant ainsi son faisceau principal de lumière 20 focalisé par le dispositif optique de focalisation 12. Ceci implique une extinction de la source lumineuse additionnelle 23 alors qu'elle est fixée au bout de l'élément 14. Cette extinction s'accompagne d'un mouvement de l'élément 14 pour le faire passer de sa première position A à sa deuxième position A' afin de dégager le passage du faisceau 20.

Selon l'invention, la source lumineuse additionnelle peut prendre une troisième forme. Cette source lumineuse additionnelle et l'élément opaque ne forment qu'une seule et même pièce, cette dernière assurant la fonction de protection contre les rayons du soleil et la fonction photométrique additionnelle.

Selon un exemple de réalisation de l'invention, l'élément opaque comprend ainsi la source lumineuse additionnelle, celle-ci prenant la forme d'une source lumineuse surfacique dont la surface qui émet de la lumière est tournée vers le dispositif optique de focalisation.

Avantageusement, l'aire d'émission de la source surfacique de lumière est supérieure à 1 cm², voire supérieure à 5 cm², voire supérieure à 10 cm².

Préférentiellement, la source surfacique de lumière présente une forte directivité d'émission dans la direction perpendiculaire à sa surface émettrice, comparativement aux diodes électroluminescentes lambertiennes.

Selon une variante de réalisation, la source surfacique de lumière a une luminance d'au moins 5 000 Cd/m2.

On notera à titre d'exemple que cette source lumineuse surfacique est une diode électroluminescente organique.

La description ci-dessus fournit tous les éléments nécessaires à la mise en oeuvre d'un procédé de commande d'un dispositif d'éclairage et/ou de signalisation selon l'une quelconque des variantes illustrées aux figures 1 à 6. Selon le procédé, le dispositif d'éclairage et/ou de signalisation comprend la source principale de lumière 7 et un dispositif optique de focalisation 12 apte à recevoir la lumière générée par la source principale de lumière 7 en vue de former un faisceau lumineux principal 20. Le dispositif d'éclairage et/ou de signalisation 1 comprend en outre un élément 14 opaque et mobile entre au moins deux positions A et A', l'une des positions interposant l'élément 14 opaque entre la source principale de lumière 7 et le dispositif optique de focalisation 12 pour empêcher une convergence de rayons 2 provenant de l'extérieur du dispositif d'éclairage et/ou de signalisation 1.

Selon ce procédé, on interpose l'élément 14 opaque entre la source principale de lumière 7 et le dispositif optique de focalisation 12 quand la source principale de lumière 7 est éteinte. Pour ce faire, un moyen de rappel maintient l'élément 14 dans sa première position A et l'actuateur 19 n'est pas activée.

Le procédé prévoit également une autre étape alternative ou complémentaire, au cours de laquelle l'élément opaque est placé entre la source principale de lumière 7 et le dispositif optique de focalisation 12 dès lors que l'alimentation électrique du véhicule est coupée, une telle alimentation fournissant l'énergie au réseau de bord du véhicule. Cette alimentation est coupée quand le plus après-contact est déconnecté.

Selon une étape supplémentaire du procédé, il est prévu que le dispositif d'éclairage et/ou de signalisation 1 comprenne la source lumineuse additionnelle 23, cette dernière étant allumée ou activée quand l'élément 14 opaque est interposé entre la source principale de lumière 7 et le dispositif optique de focalisation 12, c'est-à-dire quand il est dans sa première position A.

## Revendications

1. Dispositif d'éclairage et/ou de signalisation (1) comprenant au moins une source principale de lumière (7) et un dispositif optique de focalisation (12) apte à recevoir une lumière générée par la source principale de lumière (7) en vue de former un faisceau lumineux principal (20) **caractérisé en ce qu'il** comprend un élément (14) opaque et mobile entre au moins deux positions (A, A'), l'une des positions interposant l'élément (14) opaque entre la source principale de lumière (7) et le dispositif optique de focalisation (12), dans lequel l'élément (14) opaque est agencé de manière à ce que lorsqu'il est interposé entre la source principale de lumière (7) et le dispositif optique de focalisation (12) il empêche la focalisation par le dispositif optique de focalisation (12), notamment selon une ligne ou un point, de rayons (2) provenant de l'extérieur du dispositif d'éclairage et/ou de signalisation (1), afin d'éviter une dégradation du dispositif d'éclairage et/ou de signalisation (1).

2. Dispositif selon la revendication 1, comprenant un module optique apte à générer un faisceau lumineux, notamment un faisceau lumineux formant au moins en partie le faisceau lumineux principal, le module comprenant des composants parmi lesquels on trouve au moins la source de lumière principale (7) et le dispositif optique de focalisation (12), le dispositif d'éclairage et/ou de signalisation étant **caractérisé en ce que** l'élément opaque est agencé de manière à ce que lorsqu'il est interposé entre la source principale de lumière (7) et le dispositif optique de focalisation (12), il empêche la focalisation par le dispositif optique de focalisation (12) de rayons (2) provenant de l'extérieur du dispositif d'éclairage et/ou de signalisation (1) sur au moins un des composants du module optique, afin d'éviter une dégradation dudit composant du module optique (1).

3. Dispositif selon la revendication 2, **caractérisé en ce que** le module optique comprend au moins un organe de coupure du faisceau principal (11).

4. Dispositif selon l'une des revendications 2 ou 3, ledit au moins composant du module optique est la source de lumière principale (7) et/ou l'organe de coupure du faisceau principal (11).

5. Dispositif selon l'une quelconque des revendications 1 à 4, comprenant des moyens d'émission d'un faisceau lumineux additionnel (22) vers le dispositif optique de focalisation (12), ces moyens comprenant ledit élément (14) opaque.

6. Dispositif selon l'une quelconque des revendications 1 à 5, dans lequel l'élément (14) opaque comprend une première face (15) tournée vers le dispositif optique de focalisation (12), ladite première face étant réfléchissante.

7. Dispositif selon l'une quelconque des revendications 5 ou 6, comprenant une source lumineuse additionnelle (23) séparée de l'élément (14) opaque et permettant de générer ledit faisceau lumineux additionnel (22).

8. Dispositif selon l'une quelconque des revendications 1 à 4, dans lequel l'élément (14) opaque comprend un corps transparent ou translucide (16, 27), ledit corps comprenant une première face (15) tournée vers le dispositif optique de focalisation (12), ladite première face (15) étant transparente ou translucide, et une deuxième face (26) tournée vers la source principale de lumière (7), ladite deuxième face (26) étant opaque, ledit corps (16, 27) étant agencé pour conduire un faisceau lumineux additionnel (22).

9. Dispositif selon la revendication 8, dans lequel l'élément (14) opaque comprend une source lumineuse additionnelle (23) capable de générer ledit faisceau lumineux additionnel (22) et agencée de manière à ce que ledit faisceau lumineux additionnel (22) se propage dans ledit corps transparent ou translucide (16, 27).

10. Dispositif selon l'une quelconque des revendications 1 à 4, dans lequel l'élément (14) opaque comprend une source lumineuse additionnelle (23) capable de générer ledit faisceau lumineux additionnel (22), ladite source lumineuse additionnelle (23) étant une source lumineuse surfacique dont la surface émettant de la lumière est tournée vers le dispositif optique de focalisation (12).

11. Dispositif selon la revendication 10, dans lequel la source lumineuse surfacique est une diode électroluminescente organique.

12. Dispositif selon l'une quelconque des revendications précédentes, dans lequel l'élément (14) opaque est mobile en rotation.

13. Dispositif selon l'une quelconque des revendications précédentes, dans lequel l'élément (14) opaque est un volet apte à prendre une première position (A) interposant l'élément (14) opaque entre la source principale de lumière (7) et le dispositif optique de focalisation (12) sous l'action d'un moyen de rappel et une deuxième position (A') où il autorise le passage de la lumière en provenance de la source principale de lumière (7), notamment au travers du dispositif optique de focalisation (12), par l'activation d'un actuateur (19).

14. Dispositif selon l'une quelconque des revendications précédentes, dans lequel la source principale de lumière (7) est au moins une diode électroluminescente.

15. Dispositif selon l'une quelconque des revendications précédentes, dans lequel le dispositif optique de focalisation (12) est une lentille.

16. Procédé de commande d'un dispositif d'éclairage et/ou de signalisation (1) d'un véhicule automobile comprenant au moins une source principale de lumière (7) et un dispositif optique de focalisation (12) apte à recevoir une lumière générée par la source principale de lumière (7) en vue de former un faisceau lumineux principal (20), ledit dispositif d'éclairage et/ou de signalisation (1) comprenant un élément (14) opaque et mobile, dans lequel on interpose l'élément (14) opaque entre la source principale de lumière (7) et le dispositif optique de focalisation (12) pour empêcher la focalisation par le dispositif optique de focalisation, notamment selon une ligne ou un point, de rayons (2) provenant de l'extérieur du dispositif d'éclairage et/ou de signalisation (1), afin d'éviter une dégradation du dispositif d'éclairage et/ou de signalisation.

17. Procédé selon la revendication 16, dans lequel l'élément (14) opaque est interposé entre la source principale de lumière (7) et le dispositif optique de focalisation (12) quand la source principale de lumière (7) est éteinte.

18. Procédé selon l'une des revendications 16 ou 17, dans lequel l'élément (14) opaque est interposé entre la source principale de lumière (7) et le dispositif optique de focalisation (12) quand l'alimentation électrique du véhicule est interrompue.

19. Procédé selon l'une des revendications 16 à 18 mettant en oeuvre un dispositif d'éclairage et/ou de signalisation (1) selon l'une des revendications 1 à 15.
